# EUROPEAN PATENT SPECIFICATION

(11) **EP 2 515 487 B1**
(45) Date of publication and mention of the grant of the patent: **23.01.2019**
(21) Application number: 10844359.9
(22) Date of filing: 26.01.2010
(51) Int. Cl.: G06F 17/30, H04L 12/741

(54) **METHOD AND DEVICE FOR STORING AND SEARCHING KEYWORD**
VERFAHREN UND VORRICHTUNG ZUM SPEICHERN UND SUCHEN EINES SCHLÜSSELWORTS
PROCÉDÉ ET DISPOSITIF POUR STOCKER ET RECHERCHER UN MOT-CLEF

(43) Date of publication of application: 24.10.2012
(73) Proprietor: Huawei Technologies Co., Ltd., Longgang District Shenzhen, Guangdong 518129 (CN)
(72) Inventor: LAMBIRI, Cristian, Guangdong 518129 (CN); CUI, Xiumei, Shenzhen Guangdong 518129 (CN)
(74) Representative: Pfenning, Meinig & Partner mbB
(86) International application number: PCT/CN2010/070364
(87) International publication number: WO 2011/091581

(56) References cited:
- CN-A- 1 932 818
- CN-A- 101 247 337
- CN-A- 101 483 605
- US-A- 5 446 881
- US-A1- 2006 248 095
- US-A1- 2008 034 115
- US-B1- 6 625 612

## Description

### FIELD OF THE INVENTION

The present invention relates to the field of communications technologies, and in particular, to a method and an apparatus for storing and searching for a keyword.

### BACKGROUND OF THE INVENTION

A precision matching algorithm based on Hash (hash) is widely used in every field. A short delay, a low conflict probability, and high performance are pursuit in the industry.

The prior art provides a solution for implementing precise matching and searching by using a secondary Hash algorithm. In this solution, two Hash functions are used for precise matching and searching of one keyword (key).

An address of an initial Hash bucket may be obtained through an operation of a Hash function 1. The initial Hash bucket includes several compressed keyword units and a pointer of a cascaded linked list. Each compressed keyword unit is formed from a compressed keyword and a keyword pointer. A valid pointer of the cascaded linked list points at a cascaded Hash bucket. A data structure of the cascaded Hash bucket is consistent with that of the initial Hash bucket.

A compressed keyword may be obtained through an operation of a Hash function 2.The obtained compressed keyword is compared with a valid compressed keyword stored in the initial Hash bucket and/or the cascaded Hash bucket as follows:
If no matched compressed keyword exists in the initial Hash bucket and a corresponding linked list, whether a valid pointer of the cascaded Hash bucket exists needs to be checked, and a comparison is performed to check whether a valid matched compressed keyword exists in the cascaded Hash bucket.

If all associated Hash buckets have no matched compressed keyword, it is indicated that the searching fails. If there is a valid matched compressed keyword, whether corresponding complete keywords are matched needs to be checked one by one until a traverse is completed or a matched complete keyword is found.

If complete keywords corresponding to all valid matched compressed keywords are not matched, it is indicated that the searching fails. If a matched complete keyword is found, it is indicated that the searching is successful. In this case, the searching ends.

The prior art has the following problems:
A conflict of the Hash function 1 may result in that the initial Hash bucket needs to store many entries to reduce the number of cascaded Hash buckets. A large depth of the initial Hash bucket, however, may result in a waste of storage space and bandwidths. A conflict of the Hash function 2 may result in a conflict of the compressed keyword. In this case, a Hash bucket needs to be accessed multiple times to complete the searching, which increases a searching delay.

US 5 446 881 A (MAMMEL JR LEWIS H [US]) 29 August 1995 (1995-08-29) describes a staged hashing system comprising a list having a plurality of sequential data blocks (tuples) which are divided into stages. Each data block includes a key field and a data field. In an embodiment a key is hashed and is together with a stage number applied to an equation for deriving an offset into the index list where the respective stage starts. If searched data is not found in one stage of the index list the hashed key is again applied to the equation for a subsequent stage for deriving the offset for that stage. When a new tuple is added to a database an examination is made of the data content of each tuple in a stage for if the data in the new tuple already exists in the database. If a data item is not found in one stage it is searched for in a subsequent stage. If the data is not found, then a new tuple is allocated for the data. Each data tuple comprises a control word, a data section and a link to a next tuple in the linked list of tuples. In a preferred embodiment the key is the entire data.

US 2006/0248095 A1 discloses a system for storing keywords by employing a 2-3 way associative table, which comprises two buckets, wherein each line of the bucket may store up to three compressed keywords.

### SUMMARY OF THE INVENTION

An embodiment of the present invention provides a method for storing a keyword to save storage space and bandwidths. The method includes:
performing a first Hash function operation on a keyword to obtain an address of a first Hash bucket; and searching for the first Hash bucket according to the address of the first Hash bucket;
performing a second Hash function operation on the keyword to obtain an address of a second Hash bucket; and searching for the second Hash bucket according to the address of the second Hash bucket; and
if no compressed keyword in the first Hash bucket conflicts with a compressed keyword of the keyword, and the compressed keyword of the keyword is obtained by performing a third Hash function operation on the keyword:
   storing the compressed keyword of the keyword and a pointer of the keyword into the first Hash bucket when the first Hash bucket has remaining space; and
   storing the compressed keyword of the keyword and the pointer of the keyword into the second Hash bucket when the first Hash bucket has no remaining space, the second Hash bucket has remaining space, and no compressed keyword in the second Hash bucket conflicts with the compressed keyword of the keyword.

An example of the present invention provides a method for searching for a keyword to reduce a searching delay and improve searching efficiency. The method includes:
searching for a keyword or a compressed keyword of the keyword in a TCAM; if the keyword or the compressed keyword of the keyword fails to be found:
searching for the compressed keyword of the keyword in a first Hash bucket; and if the compressed keyword of the keyword fails to be found,
searching for the compressed keyword of the keyword in a second Hash bucket.

An embodiment of the present invention provides an apparatus for storing a keyword to save storage space and bandwidths. The apparatus includes:
a first Hash bucket searching module, configured to perform a first Hash function operation on a keyword to obtain an address of a first Hash bucket; and search for the first Hash bucket according to the address of the first Hash bucket;
a second Hash bucket searching module, configured to perform a second Hash function operation on the keyword to obtain an address of a second Hash bucket; and search for the second Hash bucket according to the address of the second Hash bucket;
a first determining module, configured to determine that no compressed keyword in the first Hash bucket conflicts with a compressed keyword of the keyword, where the compressed keyword of the keyword is obtained by performing a third Hash function operation on the keyword;
a first storing module, configured to store the compressed keyword of the keyword and a pointer of the keyword into the first Hash bucket when the first Hash bucket has remaining space; and
a second storing module, configured to store the compressed keyword of the keyword and the pointer of the keyword into the second Hash bucket when the first Hash bucket has no remaining space, the second Hash bucket has remaining space, and no compressed keyword in the second Hash bucket conflicts with the compressed keyword of the keyword.

An example of the present invention provides an apparatus for searching for a keyword to reduce a searching delay and improve searching efficiency. A keyword in the apparatus for searching is stored by the preceding apparatus for storing the keyword. The apparatus for searching includes:
a first keyword searching module, configured to search for a keyword or a compressed keyword of the keyword in a TCAM;
a second keyword searching module, configured to search for the compressed keyword of the keyword in a first Hash bucket when the first keyword searching module fails to find the keyword or the compressed keyword of the keyword; and
a third keyword searching module, configured to search for the compressed keyword of the keyword in a second Hash bucket when the second keyword searching module fails to find the compressed keyword of the keyword.

In the embodiments of the present invention, the first Hash function operation is performed on the keyword to obtain the address of the first Hash bucket; the first Hash bucket is searched for according to the address of the first Hash bucket; the second Hash function operation is performed on the keyword to obtain the address of the second Hash bucket; and the second Hash bucket is searched for according to the address of the second Hash bucket. In the prior art, only an address of an initial Hash bucket is obtained by using a Hash function, and a pointer of a cascaded linked list in the initial Hash bucket points at a cascaded Hash bucket. Different from the prior art, in the present invention, a storage operation on the keyword is completed through two Hash buckets whose addresses are obtained separately by using different Hash functions, which greatly improves memory usage and saves the storage space and bandwidths. In addition, depths of the two Hash buckets whose addresses are obtained by performing different Hash function operations on the keyword may be different, which increases storage flexibility. Further, a judgment on a compressed keyword conflict is performed when the keyword is stored into the first Hash bucket or the second Hash bucket, which may also prevent that a case of the compressed keyword conflict occurs in the first Hash bucket and the second Hash bucket.

In the embodiments of the present invention, the keyword or the compressed keyword of the keyword is searched for in the TCAM. If the keyword or the compressed keyword is found, the searching the first Hash bucket and/or the second Hash bucket may be avoided. In this case, the searching delay is greatly reduced and the searching efficiency is effectively improved.

### BRIEF DESCRIPTION OF THE DRAWINGS

To make the technical solutions provided in embodiments of the present invention or in the prior art clearer, the accompanying drawings for illustrating the embodiments or the prior art are briefly described below. Apparently, the described accompanying drawings illustrate only some embodiments of the present invention, and persons of ordinary skill in the art can derive other accompanying drawings from these accompanying drawings without any creative effort. Among the accompanying drawings:
FIG. 1 is a processing flowchart of a method for storing a keyword according to an embodiment of the present invention;
FIG. 2 is a processing flowchart of a method for searching for a keyword according to an embodiment of the present invention;
FIG. 3 is a schematic diagram of a method for storing and searching for a keyword according to an embodiment of the present invention;
FIG. 4 is another schematic diagram of a method for storing and searching for a keyword according to an embodiment of the present invention;
FIG. 5, FIG. 6, and FIG. 7 are schematic structural diagrams of apparatuses for storing a keyword according to an embodiment of the present invention; and
FIG. 8 and FIG. 9 are schematic structural diagrams of apparatuses for searching for a keyword according to an embodiment of the present invention.

### DETAILED DESCRIPTION OF THE EMBODIMENTS

To make the objectives, technical solutions, and advantages of the present invention clearer, the following describes the embodiments of the present invention in combination with the accompanying drawings. The exemplary embodiments of the present invention and the description are merely for illustrating the present invention, rather than limiting the present invention.

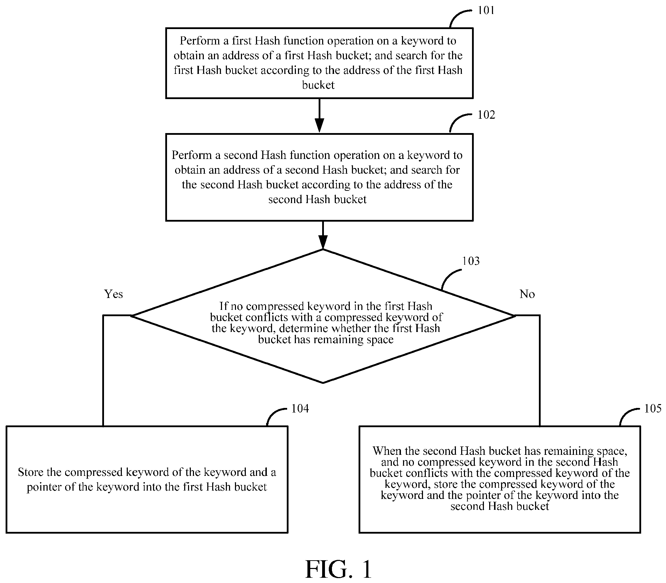

As shown in FIG. 1, in an embodiment of the present invention, a processing process of a method for storing a keyword may include:
Step 101: Perform a first Hash function operation on a keyword to obtain an address of a first Hash bucket; and search for the first Hash bucket according to the address of the first Hash bucket.
Step 102: Perform a second Hash function operation on the keyword to obtain an address of a second Hash bucket; and search for the second Hash bucket according to the address of the second Hash bucket.
Step 103: If no compressed keyword in the first Hash bucket conflicts with a compressed keyword of the keyword, where the compressed keyword of the keyword is obtained by performing a third Hash function operation on the keyword, determine whether the first Hash bucket has remaining space. If the first Hash bucket has remaining space, step 104 is performed; if the first Hash bucket has no remaining space, step 105 is performed.
Step 104: Store the compressed keyword of the keyword and a pointer of the keyword into the first Hash bucket.
Step 105: Store the compressed keyword of the keyword and the pointer of the keyword into the second Hash bucket when the second Hash bucket has remaining space, and no compressed keyword in the second Hash bucket conflicts with the compressed keyword of the keyword.

According to the process illustrated in FIG. 1, in this embodiment of the present invention, the first Hash function operation is performed on the keyword to obtain the address of the first Hash bucket; the first Hash bucket is searched for according to the address of the first Hash bucket; the second Hash function operation is performed on the keyword to obtain the address of the second Hash bucket; and the second Hash bucket is searched for according to the address of the second Hash bucket. In the prior art, only an address of an initial Hash bucket is obtained by using a Hash function, and a pointer of a cascaded linked list in the initial Hash bucket points at a cascaded Hash bucket. Different from the prior art, in this embodiment, a storage operation on the keyword is completed through two Hash buckets whose addresses are obtained separately by using different Hash functions, which greatly improves memory usage and saves storage space and bandwidths. In addition, depths of the two Hash buckets whose addresses are obtained by performing different Hash function operations on the keyword may be different, which increases storage flexibility. Further, a judgment on a compressed keyword conflict is performed when the keyword is stored into the first Hash bucket or the second Hash bucket, which may also prevent that a case of the compressed keyword conflict occurs in the first Hash bucket and the second Hash bucket.

A sequence of performing step 101 and step 102 in FIG. 1 does not affect specific implementation of this embodiment of the present invention. In step 101 and step 102, the address of the first Hash bucket may be obtained by performing the first Hash function operation on the keyword; and the address of the second Hash bucket may be obtained by performing the second Hash function operation on the keyword, where the first Hash function and the second Hash function are different Hash functions. Therefore, two different addresses of the Hash buckets may be obtained by performing operations of the two different Hash functions on the keyword. Specific settings of the two Hash functions may be known from the prior art. The first Hash bucket may be searched for according to the address of the first Hash bucket, and the second Hash bucket may be searched for according to the address of the second Hash bucket. Therefore, step 103 to step 105 may be implemented to perform the storage operation on the keyword in the first Hash bucket or the second Hash bucket. In the specific implementation, the compressed keyword of the keyword to be stored may be obtained by performing the third Hash function operation on the keyword. A specific setting of the third Hash function may also be known from the prior art.

To further prevent that the case of the compressed keyword conflict occurs in the first Hash bucket or the second Hash bucket during storage, in another embodiment, a TCAM (Ternary Content Addressable Memory, ternary content addressable memory) may further be introduced to perform the storage operation on the keyword. Definitely, a complete keyword and the pointer of the keyword may be stored in the TCAM; or the compressed keyword of the keyword and the pointer of the keyword may be stored to save the storage space. That is, the specific implementation may be:
if a compressed keyword in the first Hash bucket conflicts with the compressed keyword of the keyword, storing the keyword and the pointer of the keyword into the TCAM, or storing the compressed keyword of the keyword and the pointer of the keyword into the TCAM; or
if no compressed keyword in the first Hash bucket conflicts with the compressed keyword of the keyword and the first Hash bucket has no remaining space, and a compressed keyword in the second Hash bucket conflicts with the compressed keyword of the keyword, storing the keyword and the pointer of the keyword into the TCAM, or storing the compressed keyword of the keyword and the pointer of the keyword into the TCAM; or
if neither the first Hash bucket nor the second Hash bucket has remaining space, storing the keyword and the pointer of the keyword into the TCAM, or storing the compressed keyword of the keyword and the pointer of the keyword into the TCAM.

In an embodiment, the method for storing the keyword may also include:
if a compressed keyword in the TCAM does not conflict with a compressed keyword in the first Hash bucket, moving the compressed keyword and a corresponding keyword pointer to the first Hash bucket; and
if a compressed keyword in the TCAM does not conflict with a compressed keyword in the second Hash bucket, moving the compressed keyword and the corresponding keyword pointer to the second Hash bucket.

For example, when the number of compressed keywords of keywords and keyword pointers that are deleted from the first Hash bucket or the second Hash bucket reaches a particular value, originally conflicted compressed keywords may not in conflict. In this case, TCAM scanning may be started and the compressed keywords that are not in conflict and the corresponding keyword pointers are moved from the TCAM to the first Hash bucket or the second Hash bucket. This may effectively save TCAM space and prevent that available TCAM space is reduced after repeated addition and deletion.

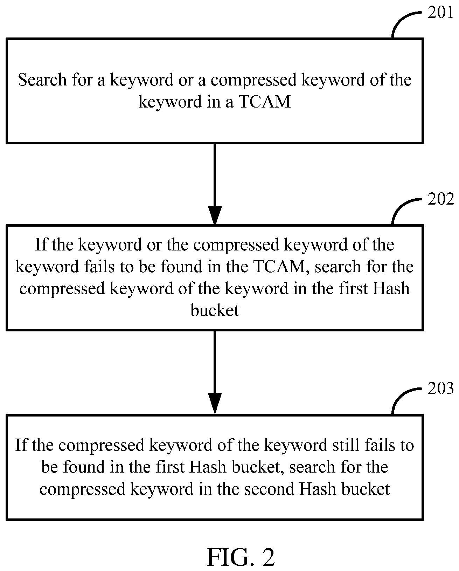

As shown in FIG. 2, an embodiment of the present invention provides a method for searching for a keyword. A keyword in the searching method is stored according to the preceding method for storing the keyword. The searching method may include:
Step 201: Search for a keyword or a compressed keyword of the keyword in a TCAM.
Step 202: If the keyword or the compressed keyword of the keyword fails to be found in the TCAM, search for the compressed keyword of the keyword in a first Hash bucket.
Step 203: If the compressed keyword of the keyword still fails to be found in the first Hash bucket, search for the compressed keyword of the keyword in a second Hash bucket.

According to the process illustrated in FIG. 2, in this embodiment of the present invention, after the keyword is stored according to the preceding method for storing the keyword, the keyword or the compressed keyword of the keyword is searched for in the TCAM first. If the keyword or the compressed keyword of the keyword is found, searching the first Hash bucket and/or the second Hash bucket may be avoided. In this way, a searching delay is greatly reduced and searching efficiency is effectively improved. During specific implementation, the searching delay may also be stabilized to a fixed value.

Definitely, in an implementation process, to improve searching accuracy, after the compressed keyword of the keyword is found in the first Hash bucket and/or the second Hash bucket, a complete keyword may further be searched for according to a keyword pointer corresponding to the compressed keyword to determine whether the desired keyword is really able to be found.

In an embodiment, if the compressed keyword of the keyword is found in the first Hash bucket, the keyword is further searched for according to the keyword pointer corresponding to the compressed keyword; if the keyword fails to be found, the compressed keyword of the keyword is searched for in the second Hash bucket; if the compressed keyword of the keyword is found in the second Hash bucket, the keyword is further searched for according to the keyword pointer corresponding to the compressed keyword.

In the searching process, if the compressed keyword of the keyword is found in both the first Hash bucket and the second Hash bucket, the compressed keyword of the keyword and the pointer of the keyword may further be moved to the TCAM. This may ensure that it would not be happened that both the first Hash bucket and the second Hash bucket are accessed during next searching. In this way, the searching efficiency is further improved.

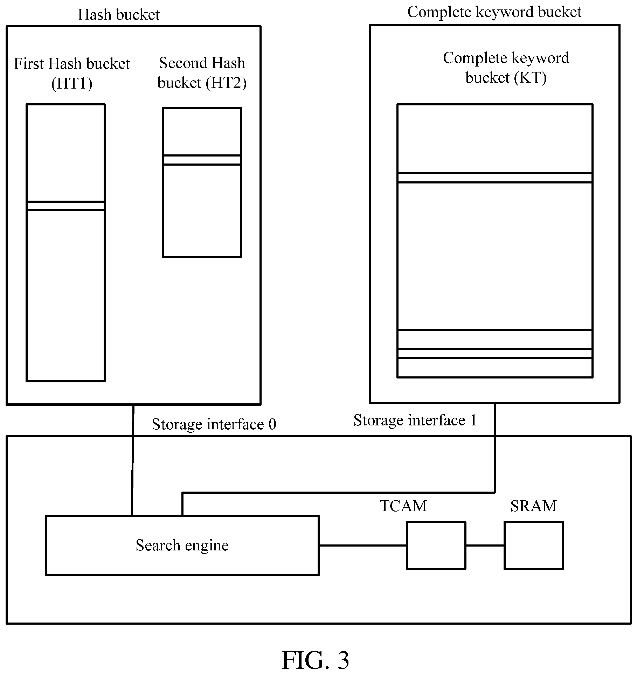

The following describes, with reference to the accompanying drawings, the method for storing the keyword and the method for searching for the keyword in the preceding embodiments. FIG. 3 is a schematic diagram of the method for storing the keyword and the method for searching for the keyword. Hash buckets in FIG. 3 include a first Hash bucket (HT1) and a second Hash bucket (HT2). FIG. 3 also shows complete keywords at which keyword pointers stored in the first Hash bucket, the second Hash bucket, and a TCAM points. These complete keywords are stored in a complete keyword bucket (KT). The Hash buckets communicate with a search engine through a storage interface 0. The complete keyword bucket communicates with the search engine through a storage interface 1. The search engine communicates with the TCAM and the TCAM communicates with an SRAM. As shown in FIG. 3, a process of performing an operation on the keyword is completed with collaboration of the first Hash bucket, the second Hash bucket, and the TCAM. The depth of the first Hash bucket and that of the second Hash bucket may be different.

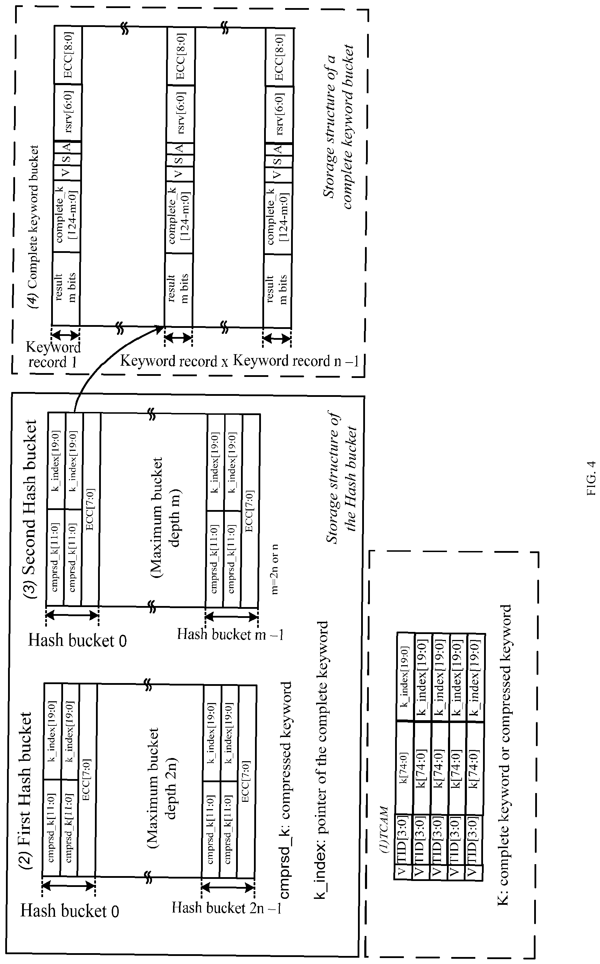

FIG. 4 specifically shows the keyword, the compressed keyword, and the pointer of the keyword that are stored in the first Hash bucket, the second Hash bucket, and the TCAM as shown in FIG. 3. The compressed keyword and the corresponding keyword pointer are stored in both the first Hash bucket and the second Hash bucket. The pointer of the keyword also points at a complete keyword in the complete keyword bucket. The keyword and the pointer of the keyword are stored in the TCAM.

Persons of ordinary skill in the art may understand that all or part of steps in the methods in the preceding embodiments may be implemented by a program instructing relevant hardware. The programs may be stored in a computer readable storage medium. When the programs are executed, all or part of steps in the methods in the preceding embodiments may be performed. The storage medium may include a ROM, a RAM, a magnetic disk, a CD-ROM, and so on.

Embodiments of the present invention provide an apparatus for storing a keyword and an apparatus for searching for a keyword, which are described in the following embodiments. Principles of solving problems by these apparatuses are similar to the method for storing the keyword and the method for searching for the keyword. Therefore, for implementation of these apparatuses, refer to the embodiments of the methods, and similar content is not described here again.

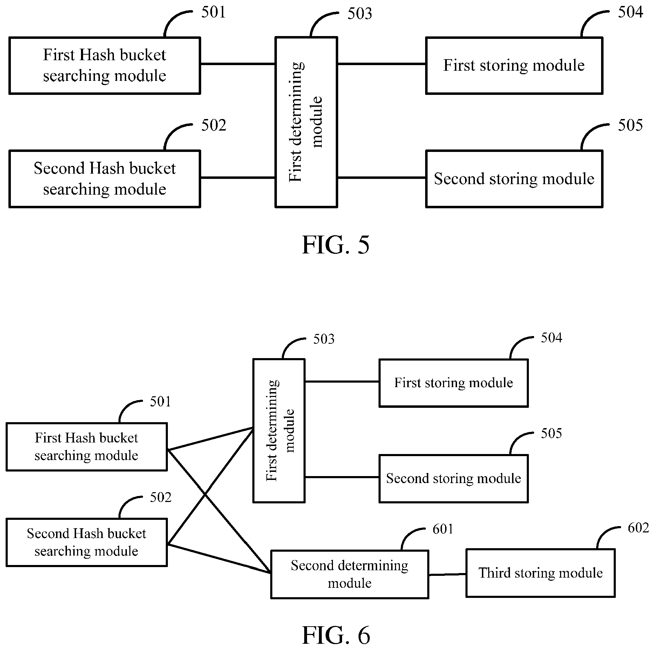

As shown in FIG. 5, an apparatus for storing a keyword in an embodiment of the present invention may include:
a first Hash bucket searching module 501, configured to perform a first Hash function operation on a keyword to obtain an address of a first Hash bucket; and search for the first Hash bucket according to the address of the first Hash bucket;
a second Hash bucket searching module 502, configured to perform a second Hash function operation on a keyword to obtain an address of a second Hash bucket; and search for the second Hash bucket according to the address of the second Hash bucket;
a first determining module 503, configured to determine that no compressed keyword in the first Hash bucket conflicts with a compressed keyword of the keyword, where the compressed keyword of the keyword is obtained by performing a third Hash function operation on the keyword;
a first storing module 504, configured to store the compressed keyword of the keyword and a pointer of the keyword into the first Hash bucket when the first Hash bucket has remaining space; and
a second storing module 505, configured to store the compressed keyword of the keyword and the pointer of the keyword into the second Hash bucket when the first Hash bucket has no remaining space, the second Hash bucket has remaining space, and no compressed keyword in the second Hash bucket conflicts with the compressed keyword of the keyword.

As shown in FIG. 6, in an embodiment, the apparatus for storing a keyword as shown in FIG. 5 may also include:
a second determining module 601, configured to determine that a compressed keyword in the first Hash bucket conflicts with the compressed keyword of the keyword; and a third storing module 602, configured to store the keyword and the pointer of the keyword into a TCAM, or store the compressed keyword of the keyword and the pointer of the keyword into the TCAM; or
a second determining module 601, configured to determine that no compressed keyword in the first Hash bucket conflicts with the compressed keyword of the keyword and the first Hash bucket has no remaining space, and a compressed keyword in the second Hash bucket conflicts with the compressed keyword of the keyword; and a third storing module 602, configured to store the keyword and the pointer of the keyword into a TCAM, or storing the compressed keyword of the keyword and the pointer of the keyword into the TCAM; or
a second determining module 601, configured to determine that neither the first Hash bucket nor the second Hash bucket has remaining space; and a third storing module 602, configured to store the keyword and the pointer of the keyword into a TCAM, or store the compressed keyword of the keyword and the pointer of the keyword into the TCAM.

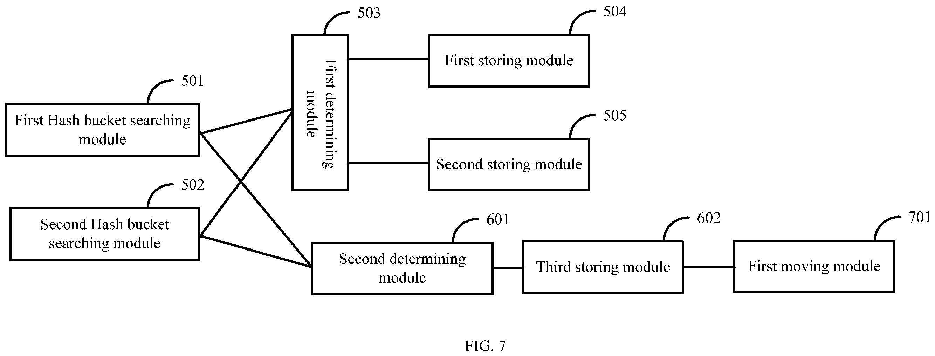

As shown in FIG. 7, in an embodiment, the apparatus for storing a keyword as shown in FIG. 6 may also include:
a first moving module 701, configured, when a compressed keyword in the TCAM does not conflict with a compressed keyword in the first Hash bucket, to move the compressed keyword and a corresponding keyword pointer to the first Hash bucket; and when a compressed keyword in the TCAM does not conflict with a compressed keyword in the second Hash bucket, to move the compressed keyword and the corresponding keyword pointer to the second Hash bucket.

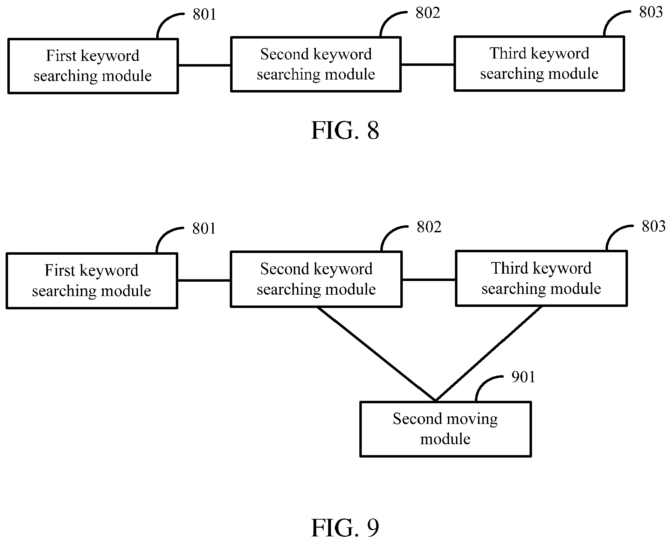

As shown in FIG. 8, an embodiment of the present invention provides an apparatus for searching for a keyword. The keyword to be searched for is stored by the apparatus for storing a keyword as shown in FIG. 6 or FIG. 7. The searching apparatus may include:
a first keyword searching module 801, configured to search for the keyword or a compressed keyword of the keyword in a TCAM;
a second keyword searching module 802, configured to search for the compressed keyword of the keyword in a first Hash bucket when the first keyword searching module 801 fails to find the compressed keyword of the keyword; and
a third keyword searching module 803, configured to search for the compressed keyword of the keyword in a second Hash bucket when the second keyword searching module 802 fails to find the compressed keyword of the keyword.

In an embodiment, the second keyword searching module 802 may be further configured to search for the keyword according to a keyword pointer corresponding to the compressed keyword when the compressed keyword of the keyword is found in the first Hash bucket; and
the third keyword searching module 803 may be further configured to search for the compressed keyword of the keyword in the second Hash bucket when the second keyword searching module 802 fails to find the keyword, and search for the keyword according to the keyword pointer corresponding to the compressed keyword when the compressed keyword of the keyword is found in the second Hash bucket.

As shown in FIG. 9, in an embodiment, the apparatus for searching for a keyword as shown in FIG. 8 may also include:
a second moving module 901, configured, when the second keyword searching module finds the compressed keyword of the keyword in the first Hash bucket and the third keyword searching module finds the compressed keyword of the keyword in the second Hash bucket, to move the compressed keyword of the keyword and the pointer of the keyword to the TCAM.

In this embodiment of the present invention, the first Hash function operation is performed on the keyword to obtain the address of the first Hash bucket; the first Hash bucket is searched for according to the address of the first Hash bucket; the second Hash function operation is performed on the keyword to obtain the address of the second Hash bucket; and the second Hash bucket is searched for according to the address of the second Hash bucket. In the prior art, only an address of an initial Hash bucket is obtained by using a Hash function, and a pointer of a cascaded linked list in the initial Hash bucket points at a cascaded Hash bucket. Different from the prior art, in this embodiment, a storage operation on the keyword is completed through two Hash buckets whose addresses are obtained separately by using different Hash functions, which greatly improves memory usage and saves storage space and bandwidths. In addition, depths of the two Hash buckets whose addresses are obtained by performing different Hash function operations on the keyword may be different, which increases storage flexibility. Further, a judgment on a compressed keyword conflict is performed when the keyword is stored into the first Hash bucket or the second Hash bucket, which may also prevent that a case of the compressed keyword conflict occurs in the first Hash bucket and the second Hash bucket.

In the embodiments of the present invention, the TCAM is introduced to perform the storage operation on the keyword, which may further prevent that the case of the compressed keyword conflict occurs in a Hash bucket. In addition, in the method for searching for the keyword, the keyword or the compressed keyword of the keyword is searched for in the TCAM first. If the compressed keyword of the keyword or the keyword is found, searching the first Hash bucket and/or the second Hash bucket may be avoided. This greatly reduces a searching delay and effectively improves searching efficiency. In addition, a compressed keyword that is not in conflict and a corresponding keyword pointer are moved from the TCAM to the Hash bucket. This may effectively save TCAM space and prevent that available TCAM space is reduced after repeated addition and deletion.

## Claims

1. A method for storing a keyword, comprising:
performing (101) a first Hash function operation on a keyword to obtain an address of a first Hash bucket; and searching (101) for the first Hash bucket according to the address of the first Hash bucket;
performing (102) a second Hash function operation on the keyword to obtain an address of a second Hash bucket; and searching (102) for the second Hash bucket according to the address of the second Hash bucket; and
if no compressed keyword in the first Hash bucket conflicts (103) with a compressed keyword of the keyword, where the compressed keyword of the keyword is obtained by performing a third Hash function operation on the keyword:
storing (104) the compressed keyword of the keyword and a pointer of the keyword into the first Hash bucket when the first Hash bucket has remaining space; and
**characterized by**:
storing (105) the compressed keyword of the keyword and the pointer of the keyword into the second Hash bucket when the first Hash bucket has no remaining space, the second Hash bucket has remaining space, and no compressed keyword in the second Hash bucket conflicts with the compressed keyword of the keyword.

2. The method according to claim 1, further comprising:
if a compressed keyword in the first Hash bucket conflicts with the compressed keyword of the keyword, storing the keyword and the pointer of the keyword into a ternary content addressable memory TCAM, or storing the compressed keyword of the keyword and the pointer of the keyword into the TCAM; or
if no compressed keyword in the first Hash bucket conflicts with the compressed keyword of the keyword and the first Hash bucket has no remaining space, and a compressed keyword in the second Hash bucket conflicts with the compressed keyword of the keyword, storing the keyword and the pointer of the keyword into the TCAM, or storing the compressed keyword of the keyword and the pointer of the keyword into the TCAM; or
if neither the first Hash bucket nor the second Hash bucket has remaining space, storing the keyword and the pointer of the keyword into the TCAM, or storing the compressed keyword of the keyword and the pointer of the keyword into the TCAM.

3. The method according to claim 2, further comprising:
if a compressed keyword in the TCAM does not conflict with a compressed keyword in the first Hash bucket, moving the compressed keyword and a corresponding keyword pointer to the first Hash bucket; and
if a compressed keyword in the TCAM does not conflict with a compressed keyword in the second Hash bucket, moving the compressed keyword and the corresponding keyword pointer to the second Hash bucket.

4. A method for searching for a keyword, wherein the keyword is stored according to the method described in claim 2 or 3, and the searching method comprises:
searching (201) for the keyword or a compressed keyword of the keyword in a TCAM; if the keyword or the compressed keyword of the keyword fails to be found,
searching (202) for the compressed keyword of the keyword in a first Hash bucket; and if the compressed keyword of the keyword fails to be found,
searching (203) for the compressed keyword of the keyword in a second Hash bucket.

5. The method according to claim 4, further comprising: when the compressed keyword of the keyword is found in the first Hash bucket, searching for the keyword according to a keyword pointer corresponding to the compressed keyword; if the keyword fails to be found, searching for the compressed keyword of the keyword in the second Hash bucket; and
if the compressed keyword of the keyword is found in the second Hash bucket, searching for the keyword according to the keyword pointer corresponding to the compressed keyword.

6. An apparatus for storing a keyword, comprising:
a first Hash bucket searching module (501), configured to perform (101) a first Hash function operation on the keyword to obtain an address of a first Hash bucket; and search (101) for the first Hash bucket according to the address of the first Hash bucket;
a second Hash bucket searching module (502), configured to perform (102) a second Hash function operation on the keyword to obtain an address of a second Hash bucket; and search (102) for the second Hash bucket according to the address of the second Hash bucket;
a first determining module (503), configured to determine that no compressed keyword in the first Hash bucket conflicts (103) with a compressed keyword of the keyword, where the compressed keyword of the keyword is obtained by performing a third Hash function operation on the keyword;
a first storing module (504), configured to store (104) the compressed keyword of the keyword and a pointer of the keyword into the first Hash bucket when the first Hash bucket has remaining space; and
**characterized by**:
a second storing module (505), configured to store (105) the compressed keyword of the keyword and the pointer of the keyword into the second Hash bucket when the first Hash bucket has no remaining space, the second Hash bucket has remaining space, and no compressed keyword in the second Hash bucket conflicts with the compressed keyword of the keyword.

7. The apparatus according to claim 6, further comprising:
a second determining module, configured to determine that a compressed keyword in the first Hash bucket conflicts with the compressed keyword of the keyword; and a third storing module, configured to store the keyword and the pointer of the keyword into a TCAM, or store the compressed keyword of the keyword and the pointer of the keyword into the TCAM; or
a second determining module, configured to determine that no compressed keyword in the first Hash bucket conflicts with the compressed keyword of the keyword and the first Hash bucket has no remaining space, and a compressed keyword in the second Hash bucket conflicts with the compressed keyword of the keyword; and a third storing module, configured to store the keyword and the pointer of the keyword into the TCAM, or store the compressed keyword of the keyword and the pointer of the keyword into the TCAM; or
a second determining module, configured to determine that neither the first Hash bucket nor the second Hash bucket has remaining space; and a third storing module, configured to store the keyword and the pointer of the keyword into the TCAM, or store the compressed keyword of the keyword and the pointer of the keyword into the TCAM.

8. The apparatus according to claim 7, further comprising:
a first moving module (701), configured, when a compressed keyword in the TCAM does not conflict with a compressed keyword in the first Hash bucket, to move the compressed keyword and a corresponding keyword pointer to the first Hash bucket; and when a compressed keyword in the TCAM does not conflict with a compressed keyword in the second Hash bucket, move the compressed keyword and the corresponding keyword pointer to the second Hash bucket.

9. An apparatus for searching for a keyword, wherein the keyword is stored by the apparatus for storing a keyword according to claim 7 or 8, and the searching apparatus comprises:
a first keyword searching module (801), configured to search for the keyword or a compressed keyword of the keyword in a TCAM;
a second keyword searching module (802), configured to search for the compressed keyword of the keyword in a first Hash bucket when the first keyword searching module fails to find the keyword or the compressed keyword of the keyword; and
a third keyword searching module (803), configured to search for the compressed keyword of the keyword in a second Hash bucket when the second keyword searching module fails to find the compressed keyword of the keyword.

10. The apparatus according to claim 9, wherein the second keyword searching (802) module is further configured to:
search for the keyword according to a keyword pointer corresponding to the compressed keyword when the compressed keyword of the keyword is found in the first Hash bucket; and
the third keyword searching module (803) is further configured to: search for the compressed keyword of the keyword in the second Hash bucket when the second keyword searching module fails to find the keyword; and search for the keyword according to the keyword pointer corresponding to the compressed keyword when the compressed keyword of the keyword is found in the second Hash bucket.

## Patentansprüche

1. Verfahren zum Speichern eines Schlüsselworts, umfassend:
Durchführen (101) einer ersten Hash-Funktionsoperation an einem Schlüsselwort, um eine Adresse eines ersten Hash-Buckets zu erhalten; und Suchen (101) nach dem ersten Hash-Bucket gemäß der Adresse des ersten Hash-Buckets;
Durchführen (102) einer zweiten Hash-Funktionsoperation am Schlüsselwort, um eine Adresse eines zweiten Hash-Buckets zu erhalten; und Suchen (102) nach dem zweiten Hash-Bucket gemäß der Adresse des zweiten Hash-Buckets; und
falls kein komprimiertes Schlüsselwort im ersten Hash-Bucket mit einem komprimierten Schlüsselwort des Schlüsselworts konfliktiert (103), wobei das komprimierte Schlüsselwort des Schlüsselworts erhalten wird, indem eine dritte Hash-Funktionsoperation am Schlüsselwort durchgeführt wird:
Speichern (104) des komprimierten Schlüsselworts des Schlüsselworts und eines Zeigers des Schlüsselworts im ersten Hash-Bucket, wenn der erste Hash-Bucket verbleibenden Platz aufweist; und
**gekennzeichnet durch**:
Speichern (105) des komprimierten Schlüsselworts des Schlüsselworts und des Zeigers des Schlüsselworts im zweiten Hash-Bucket, wenn der erste Hash-Bucket keinen verbleibenden Platz aufweist, der zweite Hash-Bucket verbleibenden Platz aufweist und kein komprimiertes Schlüsselwort im zweiten Hash-Bucket mit dem komprimierten Schlüsselwort des Schlüsselworts konfliktiert.

2. Verfahren nach Anspruch 1, ferner umfassend:
falls ein komprimiertes Schlüsselwort im ersten Hash-Bucket mit dem komprimierten Schlüsselwort des Schlüsselworts konfliktiert, Speichern des Schlüsselworts und des Zeigers des Schlüsselworts in einem ternären inhaltsadressierbaren Speicher (TCAM, Ternary Content Addressable Memory) oder Speichern des komprimierten Schlüsselworts des Schlüsselworts und des Zeigers des Schlüsselworts im TCAM; oder
falls kein komprimiertes Schlüsselwort im ersten Hash-Bucket mit dem komprimierten Schlüsselwort des Schlüsselworts konfliktiert und der erste Hash-Bucket keinen verbleibenden Platz aufweist und ein komprimiertes Schlüsselwort im zweiten Hash-Bucket mit dem komprimierten Schlüsselwort des Schlüsselworts konfliktiert, Speichern des Schlüsselworts und des Zeigers des Schlüsselworts im TCAM oder Speichern des komprimierten Schlüsselworts des Schlüsselworts und des Zeigers des Schlüsselworts im TCAM; oder
falls weder der erste Hash-Bucket noch der zweite Hash-Bucket verbleibenden Platz aufweisen, Speichern des Schlüsselworts und des Zeigers des Schlüsselworts im TCAM oder Speichern des komprimierten Schlüsselworts des Schlüsselworts und des Zeigers des Schlüsselworts im TCAM.

3. Verfahren nach Anspruch 2, ferner umfassend:
falls ein komprimiertes Schlüsselwort im TCAM nicht mit einem komprimierten Schlüsselwort im ersten Hash-Bucket konfliktiert, Bewegen des komprimierten Schlüsselworts und eines entsprechenden Schlüsselwortzeigers zum ersten Hash-Bucket; und
falls ein komprimiertes Schlüsselwort im TCAM nicht mit einem komprimierten Schlüsselwort im zweiten Hash-Bucket konfliktiert, Bewegen des komprimierten Schlüsselworts und des entsprechenden Schlüsselwortzeigers zum zweiten Hash-Bucket.

4. Verfahren zum Suchen nach einem Schlüsselwort, wobei das Schlüsselwort gemäß dem in Anspruch 2 oder 3 beschriebenen Verfahren gespeichert wird und das Suchverfahren umfasst:
Suchen (201) nach dem Schlüsselwort oder einem komprimierten Schlüsselwort des Schlüsselworts in einem TCAM; falls das Schlüsselwort oder das komprimierte Schlüsselwort des Schlüsselworts nicht gefunden wird,
Suchen (202) nach dem komprimierten Schlüsselwort des Schlüsselworts in einem ersten Hash-Bucket; und falls das komprimierte Schlüsselwort des Schlüsselworts nicht gefunden wird,
Suchen (203) nach dem komprimierten Schlüsselwort des Schlüsselworts in einem zweiten Hash-Bucket.

5. Verfahren nach Anspruch 4, ferner umfassend: wenn das komprimierte Schlüsselwort des Schlüsselworts im ersten Hash-Bucket gefunden wird, Suchen nach dem Schlüsselwort gemäß einem Schlüsselwortzeiger, der dem komprimierten Schlüsselwort entspricht; falls das Schlüsselwort nicht gefunden wird, Suchen nach dem komprimierten Schlüsselwort des Schlüsselworts im zweiten Hash-Bucket; und
falls das komprimierte Schlüsselwort des Schlüsselworts im zweiten Hash-Bucket gefunden wird, Suchen nach dem Schlüsselwort gemäß dem Schlüsselwortzeiger, der dem komprimierten Schlüsselwort entspricht.

6. Vorrichtung zum Speichern eines Schlüsselworts, umfassend:
ein erstes Hash-Bucket-Suchmodul (501), das zum Durchführen (101) einer ersten Hash-Funktionsoperation am Schlüsselwort ausgelegt ist, um eine Adresse eines ersten Hash-Buckets zu erhalten; und Suchen (101) nach dem ersten Hash-Bucket gemäß der Adresse des ersten Hash-Buckets;
ein zweites Hash-Bucket-Suchmodul (502), das zum Durchführen (102) einer zweiten Hash-Funktionsoperation am Schlüsselwort ausgelegt ist, um eine Adresse eines zweiten Hash-Buckets zu erhalten; und Suchen (102) nach dem zweiten Hash-Bucket gemäß der Adresse des zweiten Hash-Buckets;
ein erstes Bestimmungsmodul (503), das zum Bestimmen ausgelegt ist, dass kein komprimiertes Schlüsselwort im ersten Hash-Bucket mit einem komprimierten Schlüsselwort des Schlüsselworts konfliktiert (103), wobei das komprimierte Schlüsselwort des Schlüsselworts erhalten wird, indem eine dritte Hash-Funktionsoperation am Schlüsselwort durchgeführt wird;
ein erstes Speichermodul (504), das zum Speichern (104) des komprimierten Schlüsselworts des Schlüsselworts und eines Zeigers des Schlüsselworts im ersten Hash-Bucket ausgelegt ist, wenn der erste Hash-Bucket verbleibenden Platz aufweist; und **gekennzeichnet durch**:
ein zweites Speichermodul (505), das zum Speichern (105) des komprimierten Schlüsselworts des Schlüsselworts und des Zeigers des Schlüsselworts im zweiten Hash-Bucket ausgelegt ist, wenn der erste Hash-Bucket keinen verbleibenden Platz aufweist, der zweite Hash-Bucket verbleibenden Platz aufweist und kein komprimiertes Schlüsselwort im zweiten Hash-Bucket mit dem komprimierten Schlüsselwort des Schlüsselworts konfliktiert.

7. Vorrichtung nach Anspruch 6, ferner umfassend:
ein zweites Bestimmungsmodul, das zum Bestimmen ausgelegt ist, dass ein komprimiertes Schlüsselwort im ersten Hash-Bucket mit dem komprimierten Schlüsselwort des Schlüsselworts konfliktiert; und ein drittes Speichermodul, das zum Speichern des Schlüsselworts und des Zeigers des Schlüsselworts in einem TCAM oder Speichern des komprimierten Schlüsselworts des Schlüsselworts und des Zeigers des Schlüsselworts im TCAM ausgelegt ist; oder ein zweites Bestimmungsmodul, das zum Bestimmen ausgelegt ist, dass kein komprimiertes Schlüsselwort im ersten Hash-Bucket mit dem komprimierten Schlüsselwort des Schlüsselworts konfliktiert und der erste Hash-Bucket keinen verbleibenden Platz aufweist und ein komprimiertes Schlüsselwort im zweiten Hash-Bucket mit dem komprimierten Schlüsselwort des Schlüsselworts konfliktiert; und ein drittes Speichermodul, das zum Speichern des Schlüsselworts und des Zeigers des Schlüsselworts im TCAM oder Speichern des komprimierten Schlüsselworts des Schlüsselworts und des Zeigers des Schlüsselworts im TCAM ausgelegt ist; oder
ein zweites Bestimmungsmodul, das zum Bestimmen ausgelegt ist, dass weder der erste Hash-Bucket noch der zweite Hash-Bucket verbleibenden Platz aufweisen; und ein drittes Speichermodul, das zum Speichern des Schlüsselworts und des Zeigers des Schlüsselworts im TCAM oder Speichern des komprimierten Schlüsselworts des Schlüsselworts und des Zeigers des Schlüsselworts im TCAM ausgelegt ist.

8. Vorrichtung nach Anspruch 7, ferner umfassend:
ein erstes Bewegungsmodul (701), das, wenn ein komprimiertes Schlüsselwort im TCAM nicht mit einem komprimierten Schlüsselwort im ersten Hash-Bucket konfliktiert, zum Bewegen des komprimierten Schlüsselworts und eines entsprechenden Schlüsselwortzeigers zum ersten Hash-Bucket ausgelegt ist; und wenn ein komprimiertes Schlüsselwort im TCAM nicht mit einem komprimierten Schlüsselwort im zweiten Hash-Bucket konfliktiert, Bewegen des komprimierten Schlüsselworts und des entsprechenden Schlüsselwortzeigers zum zweiten Hash-Bucket.

9. Vorrichtung zum Suchen nach einem Schlüsselwort, wobei das Schlüsselwort durch die Vorrichtung zum Speichern eines Schlüsselworts nach Anspruch 7 oder 8 gespeichert wird und die Suchvorrichtung umfasst:
ein erstes Schlüsselwortsuchmodul (801), das zum Suchen nach dem Schlüsselwort oder einem komprimierten Schlüsselwort des Schlüsselworts in einem TCAM ausgelegt ist;
ein zweites Schlüsselwortsuchmodul (802), das zum Suchen nach dem komprimierten Schlüsselwort des Schlüsselworts in einem ersten Hash-Bucket ausgelegt ist, wenn das erste Schlüsselwortsuchmodul das Schlüsselwort oder das komprimierte Schlüsselwort des Schlüsselworts nicht findet; und
ein drittes Schlüsselwortsuchmodul (803), das zum Suchen nach dem komprimierten Schlüsselwort des Schlüsselworts in einem zweiten Hash-Bucket ausgelegt ist, wenn das zweite Schlüsselwortsuchmodul das komprimierte Schlüsselwort des Schlüsselworts nicht findet.

10. Vorrichtung nach Anspruch 9, wobei das zweite Schlüsselwortsuchmodul (802) ferner ausgelegt ist zum:
Suchen nach dem Schlüsselwort gemäß einem Schlüsselwortzeiger, der dem komprimierten Schlüsselwort entspricht, wenn das komprimierte Schlüsselwort des Schlüsselworts im ersten Hash-Bucket gefunden wird; und
das dritte Schlüsselwortsuchmodul (803) ferner ausgelegt ist zum: Suchen nach dem komprimierten Schlüsselwort des Schlüsselworts im zweiten Hash-Bucket, wenn das zweite Schlüsselwortsuchmodul das Schlüsselwort nicht findet; und Suchen nach dem Schlüsselwort gemäß dem Schlüsselwortzeiger, der dem komprimierten Schlüsselwort entspricht, wenn das komprimierte Schlüsselwort des Schlüsselworts im zweiten Hash-Bucket gefunden wird.

## Revendications

1. Procédé de stockage d'un mot clé, comprenant :
l'exécution (101) d'une première opération de la fonction de hachage sur un mot clé pour obtenir une adresse d'un premier compartiment de hachage ; et la recherche (101) du premier compartiment de hachage en fonction de l'adresse du premier compartiment de hachage ;
l'exécution (102) d'une seconde opération de la fonction de hachage sur le mot clé pour obtenir une adresse d'un second compartiment de hachage ; et la recherche (102) du second compartiment de hachage en fonction de l'adresse du second compartiment de hachage ; et
si aucun mot clé comprimé dans le premier compartiment de hachage n'est en conflit (103) avec une version comprimée du mot clé, où la version comprimée du mot clé est obtenue en exécutant une troisième opération de la fonction de hachage sur le mot clé :
le stockage (104) de la version comprimée du mot clé et d'un pointeur du mot clé dans le premier compartiment de hachage lorsqu'il reste de la place dans le premier compartiment de hachage ; et
**caractérisé par** :
le stockage (105) de la version comprimée du mot clé et du pointeur du mot clé dans le second compartiment de hachage lorsque le premier compartiment de hachage n'a plus de place disponible, que le second compartiment de hachage dispose d'espace restant, et qu'aucun mot clé comprimé dans le second compartiment de hachage n'est en conflit avec la version comprimée du mot clé.

2. Procédé selon la revendication 1, comprenant en outre :
si un mot clé comprimé dans le premier compartiment de hachage entre en conflit avec la version comprimée du mot clé, le stockage du mot clé et du pointeur du mot-clé dans une mémoire adressable au contenu ternaire TCAM (ternary content addressable memory), ou en stockant la version comprimée du mot clé et le pointeur du mot clé dans la TCAM ; ou
si aucun mot clé comprimé dans le premier compartiment de hachage n'est en conflit avec la version comprimée du mot clé et le premier compartiment de hachage n'a plus de place restante et si un mot clé comprimé dans le deuxième compartiment de hachage est en conflit avec la version comprimée du mot clé, le stockage du mot clé et du pointeur du mot clé dans la TCAM ou le stockage de la version comprimée du mot clé et du pointeur du mot-clé dans la TCAM ; ou
si ni le premier compartiment de hachage ni le second compartiment de hachage n'a de la place restante, le stockage du mot-clé et du pointeur du mot clé dans la TCAM ou le stockage de la version comprimée du mot clé et du pointeur du mot clé dans la TCAM.

3. Procédé selon la revendication 2, comprenant en outre :
si un mot clé comprimé dans la TCAM n'entre pas en conflit avec un mot clé comprimé dans le premier compartiment de hachage, déplacement du mot clé comprimé et d'un pointeur de mot clé correspondant dans le premier compartiment de hachage ; et
si un mot clé comprimé dans la TCAM n'entre pas en conflit avec un mot clé comprimé dans le second compartiment de hachage, déplacement du mot clé comprimé et d'un pointeur de mot clé correspondant dans le second compartiment de hachage.

4. Procédé pour la recherche d'un mot-clé, dans lequel le mot clé est stocké selon le procédé décrit dans la revendication 2 ou 3, et le procédé de recherche comprend :
la recherche (201) du mot clé ou d'une version comprimée du mot clé dans une TCAM ; si le mot clé ou la version comprimée du mot clé ne peuvent être trouvés,
la recherche (202) de la version comprimée du mot clé dans un premier compartiment de hachage ; et si la version comprimée du mot clé ne peut être trouvée,
la recherche (203) de la version comprimée du mot clé dans un second compartiment de hachage.

5. Procédé selon la revendication 4, comprenant en outre : lorsque la version comprimée du mot clé est trouvée dans le premier compartiment de hachage, la recherche du mot clé en fonction d'un pointeur de mot clé correspondant au mot clé comprimé ; si le mot clé est introuvable, la recherche de la version comprimée du mot clé dans le second compartiment de hachage ; et
lorsque la version comprimée du mot clé est trouvée dans le second compartiment de hachage, la recherche du mot clé en fonction du pointeur de mot clé correspondant au mot clé comprimé.

6. Appareil pour le stockage d'un mot clé, comprenant :
un module de recherche dans le premier compartiment de hachage (501), configuré pour effectuer (101) une première opération de la fonction de hachage sur le mot clé afin d'obtenir une adresse d'un premier compartiment de hachage ; et rechercher (101) le premier compartiment de hachage en fonction de l'adresse du premier compartiment de hachage ;
un module de recherche dans le second compartiment de hachage (502), configuré pour effectuer (102) une seconde opération de la fonction de hachage sur le mot clé afin d'obtenir une adresse d'un second compartiment de hachage ; et rechercher (102) le second compartiment de hachage en fonction de l'adresse du second compartiment de hachage ;
un premier module de détermination (503), configuré pour déterminer qu'aucun mot clé comprimé dans le premier compartiment de hachage n'est en conflit (103) avec une version comprimée du mot clé, où la version comprimée du mot clé est obtenue en exécutant une troisième opération de la fonction de hachage sur le mot clé ;
un premier module de stockage (504) configuré pour stocker (104) la version comprimée du mot clé et un pointeur du mot clé dans le premier compartiment de hachage lorsqu'il reste de la place dans le premier compartiment de hachage ; et
**caractérisé par** :
un second module de stockage (505), configuré pour stocker (105) la version comprimée du mot clé et le pointeur du mot clé dans le second compartiment de hachage lorsque le premier compartiment de hachage n'a pas de place restante, que le second compartiment de hachage a de la place restante et qu'aucun mot clé comprimé dans le second compartiment de hachage n'est en conflit avec la version comprimée du mot clé.

7. Appareil selon la revendication 6, comprenant en outre :
un second module de détermination, configuré pour déterminer qu'un mot clé comprimé dans le premier compartiment de hachage est en conflit avec la version comprimée du mot clé ; et un troisième module de stockage, configuré pour stocker le mot clé et le pointeur du mot clé dans une TCAM, ou stocker la version comprimée du mot clé et le pointeur du mot clé dans la TCAM ; ou
un second module de détermination, configuré pour déterminer qu'aucun mot clé comprimé dans le premier compartiment de hachage n'entre en conflit avec la version comprimée du mot clé et que le premier compartiment de hachage n'a plus de place restante et qu'un mot clé comprimé dans le second compartiment de hachage entre en conflit avec la version comprimée du mot clé ; et un troisième module de stockage, configuré pour stocker le mot clé et le pointeur du mot clé dans la TCAM, ou stocker la version comprimée du mot clé et le pointeur du mot-clé dans la TCAM ; ou
un second module de détermination, configuré pour déterminer que ni le premier compartiment de hachage ni le second compartiment de hachage n'a de place restante ; et un troisième module de stockage, configuré pour stocker le mot clé et le pointeur du mot clé dans la TCAM, ou stocker la version comprimée du mot clé et le pointeur du mot-clé dans la TCAM.

8. Appareil selon la revendication 7, comprenant en outre :
un premier module de déplacement (701), configuré pour, lorsqu'un mot clé comprimé dans la TCAM n'entre pas en conflit avec un mot clé comprimé dans le premier compartiment de hachage, déplacer le mot clé comprimé et un pointeur de mot clé correspondant dans le premier compartiment de hachage ; et lorsqu'un mot clé comprimé dans la TCAM n'entre pas en conflit avec un mot clé comprimé dans le second compartiment de hachage, déplacer le mot clé comprimé et le pointeur de mot clé correspondant dans le second compartiment de hachage.

9. Appareil pour la recherche d'un mot-clé, dans lequel le mot clé est stocké par l'appareil pour stocker un mot clé selon la revendication 7 ou 8, et l'appareil de recherche comprend :
un premier module de recherche de mot clé (801) configuré pour rechercher le mot clé ou une version comprimée du mot clé dans une TCAM ;
un second module de recherche de mot clé (802), configuré pour rechercher la version comprimée du mot clé dans un premier compartiment de hachage lorsque le premier module de recherche de mot clé ne parvient pas à trouver le mot clé ou la version comprimée du mot clé ; et
un troisième module de recherche de mot clé (803), configuré pour rechercher la version comprimée du mot clé dans un second compartiment de hachage lorsque le second module de recherche de mot clé ne parvient pas à trouver la version comprimée du mot clé.

10. Appareil selon la revendication 9, dans lequel le second module de recherche d'un mot clé (802) est en outre configuré pour :
rechercher le mot clé en fonction d'un pointeur de mot clé correspondant au mot clé comprimé lorsque la version comprimée du mot clé est trouvée dans le premier compartiment de hachage ; et
le troisième module de recherche de mot clé (803) est en outre configuré pour : rechercher la version comprimée du mot clé dans le second compartiment de hachage lorsque le second module de recherche de mot clé ne parvient pas à trouver le mot clé ; et rechercher le mot clé en fonction du pointeur de mot clé correspondant au mot clé comprimé lorsque la version comprimée du mot clé est trouvée dans le second compartiment de hachage.
